# EUROPÄISCHE PATENTSCHRIFT

(11) **EP 4 374 954 B1**
(45) Veröffentlichungstag und Bekanntmachung des Hinweises auf die Patenterteilung: **01.07.2026**
(21) Anmeldenummer: 23204247.3
(22) Anmeldetag: 18.10.2023
(51) Int. Cl.: B01F 23/232, B01F 33/40, C02F 3/22, C02F 3/12

(54) **DURCHMISCHUNGSVORRICHTUNG UND VERWENDUNG**
MIXING DEVICE AND USE
DISPOSITIF DE MÉLANGE ET UTILISATION

(30) Priorität: 22.11.2022 DE 102022130905
(43) Veröffentlichungstag der Anmeldung: 29.05.2024
(73) Patentinhaber: NWT OG, 5020 Salzburg (AT)
(72) Erfinder: Dr. Demoulin, Gunnar, 5026 Salzburg (AT)
(74) Vertreter: Charrier Rapp & Liebau

(56) Entgegenhaltungen:
- WO-A1-2021/152487
- DE-A1- 1 517 592
- DE-A1- 3 517 600
- JP-U- S 552 410
- US-A- 3 817 500
- US-A- 3 855 367

## Beschreibung

Die Erfindung betrifft eine Durchmischungsvorrichtung nach Art einer Mammutpumpe und eine Verwendung derselben in einer Wasserbehandlungsvorrichtung.

Mammutpumpen sind zumeist vertikal, d.h. in Schwerkraftrichtung, aufgestellte Vorrichtungen mit einem an einem ersten, unteren Ende befindlichen Einlauf, einem am gegenüberliegenden, oberen Ende befindlichen Auslauf und einem sich dazwischen erstreckenden Strömungskanal zum Fördern von Flüssigkeiten von dem Einlauf zu dem Auslauf. Das Fördern der Flüssigkeit wird hierbei von in den Strömungskanal eingebrachten Gasen bewerkstelligt, die die spezifische Dichte der Flüssigkeit am Ort des Einbringens lokal verringern, in dem Strömungskanal aufsteigen und hierdurch einen Unterdruck entfalten, über den weitere Flüssigkeit von unten nachgesaugt wird.

Wasserbehandlungsvorrichtungen kommen insbesondere zur Aufbereitung von Abwasser, zur Gewinnung von Trinkwasser sowie zur Vor- und/oder Nachbehandlung von wässrigen Lösungen zum Einsatz. Unter Wasserbehandlungsvorrichtungen sind dabei Anlagen zu verstehen, deren Haupteinsatzzweck die Behandlung von Wasser, d.h. Entfernen von unerwünschten Inhaltsstoffen aus dem Wasser und/oder Anreicherung oder Vermischung mit gewünschten Zusatzstoffen, wie beispielsweise Ausfällmitteln oder Belebtschlamm, ist.

Aus dem Stand der Technik bekannte Durchmischungsvorrichtungen, die nach dem Prinzip einer Mammutpumpe arbeiten, sind bspw. aus der deutschen Veröffentlichungsschrift DE 2 943 870 A1 bekannt. Die hieraus bekannte Durchmischungsvorrichtung umfasst einen tellerartig vergrößerten Einlauf, einen in radialer Richtung gerichteten Auslauf und einen sich dazwischen erstreckenden Strömungskanal, in welchen über Verteilerrohre Gas eingeblasen wird.

Die DE 2 630 118 A1 zeigt ein nach dem Prinzip einer Mammutpumpe arbeitende Durchmischungsvorrichtung zum Umwälzen eines Fluids in einem mit dem Fluid gefüllten Behälter von einem ersten Niveau auf ein zweites Niveau mit einem entlang einer Längsachse sich erstreckenden, hohlleiterartigen, einen Strömungskanal ausbildenden Grundkörper mit einer Mantelfläche mit einem an einem unteren Ende befindlichen Einlauf zum Ansaugen des Fluids und einem an einem oberen Ende befindlichen Auslauf zur Abgabe des Fluids, einem dazwischen befindlichen Gasauslass zum Einblasen eines Gases zur Erzeugung eines Sogs am Einlauf, wobei der Einlauf in einem trichterförmigen Einlaufbereich angeordnet ist und der Auslauf in einem röhrenförmigen Abschnitt angeordnet ist und wobei der trichterförmige Einlaufbereich und der röhrenförmige Abschnitt den Strömungskanal ausbilden, wobei der Grundkörper zweiteilig ausgebildet ist, derart, dass der Einlaufbereich und der röhrenförmige Abschnitt jeweils ein eigenständiges Bauteil ausbilden.

Gegenstand der WO 2022/075830 A1 ist eine Durchmischungsvorrichtung für Wasserbehandlungsvorrichtungen, welche einen zweiteiligen Aufbau aufweist.

Die US 3 855 367 A und die US 3 817 500 A zeigen eine nach dem Prinzip einer Mammutpumpe arbeitende Durchmischungsvorrichtung, welche entsprechend dem Oberbegriff des Anspruchs 1 aufgebaut ist.

Durch den tellerartigen Einlauf, die Verteilerrohre und eine sich dazwischen erstreckende Trennwand, über die eine Abtrennung von Kalk und Eisensulfat möglich sein soll, ist die Durchmischungsvorrichtung stark verstopfungsgefährdet, da insb. mit aufgewirbelte Bodensedimente in den Engstellen festhängen und anwachsen können. Ferner ist die Durchmischungsvorrichtung platzintensiv und daher aufwendig zu transportieren.

Vor diesem Hintergrund ist es Aufgabe der Erfindung, eine Durchmischungsvorrichtung anzugeben, welche einige Nachteile aus dem Stand der Technik vermeidet, und insb. ressourceneffizient im Hinblick auf Herstellungs-, Installations- und Betriebskosten ist.

Die erfindungsgemäße Durchmischungsvorrichtung dient dem Zweck, ein flüssiges Fluid in einem Fluidbehälter von einem ersten Niveau auf ein zweites Niveau anzuheben und hierdurch das Fluid umzuwälzen und zu durchmischen. Da die erfindungsgemäße Durchmischungsvorrichtung nach dem Prinzip einer Mammutpumpe arbeitet, d.h. der Durchmischungsvorrichtung im Betrieb ein Gas zugeführt wird, kann das Fluid mit diesem Gas angereichert werden. Wenn keine Wechselwirkung zwischen dem Gas und dem Fluid gewünscht ist, kann die Funktion des Gases jedoch auch vollständig auf die Funktion des Umwälzens reduziert sein. Je nach Einsatzzweck eigenen sich daher gegenüber dem Fluid oder seinen Bestandteilen (insb. Verunreinigungen oder Beimischungen) inert wirkende oder eben reaktionsfreudige Gase. Bei geeigneter Platzierung können über den Einlauf neben dem Fluid natürlich auch weitere Fremdstoffe, etwa Sedimente, angesaugt und mit dem Fluid durchmischt werden.

Die Durchmischungsvorrichtung ist so aufgebaut, dass sie einen sich entlang einer Längsachse erstreckenden, hohlleiterartigen Grundkörper mit einem oberen und einem unteren Ende umfasst, wobei am unteren Ende ein Einlauf und am oberen Ende ein Auslauf angeordnet sind. Der hohlleiterartige Grundkörper, genauer gesagt dessen Wandung, bildet einen Strömungskanal zwischen dem Einlauf und dem Auslauf aus. Der Einlauf weist eine Einlauföffnung auf, über die Fluid am unteren Ende eingesaugt werden kann, während der Auslauf eine Auslauföffnung aufweist, über die das am Einlauf angesaugte und durch den Strömungskanal geförderte Fluid ausgegeben wird. Zwischen dem Ein- und dem Auslauf befindet sich ein Gasauslass zum Einblasen (Zuführen) eines Gases. Das Gas wird dabei unter Druck eingeblasen, welcher zumindest so hoch oder höher ist, wie der durch die über dem Gasauslass stehende Fluidsäule erzeugte hydrostatische Druck ist. Andernfalls wäre eine Gaszuführung nicht möglich. Indem das eingeblasene Gas in dem Strömungskanal nach oben steigt, erzeugt es einen (Nach)Saugeffekt am Einlauf, so dass das Fluid am Einlauf eingesaugt wird.

Um den Sogbereich am Einlauf zu vergrößern, ist der Einlauf trichterartig vergrößert, so dass sich der Einlauf mit der Einlauföffnung am unteren Ende eines trichterförmigen Abschnitts (nachfolgend als Einlaufbereich bezeichnet) befindet. Der trichterförmige Einlaufbereich geht weiter oben dann in einen röhrenförmigen Abschnitt über. Der trichterförmige Einlaufbereich bildet einen unteren Teilabschnitt des Strömungskanals. Der röhrenförmige Abschnitt bildet einen oberen Teilabschnitt des Strömungskanals.

Die Durchmischungsvorrichtung zeichnet sich dadurch aus, dass der Grundkörper im Wesentlichen zweiteilig aus dem trichterförmigen Einlaufbereich sowie dem röhrenförmigen Abschnitt ausgebildet ist, wobei es sich bei dem trichterförmigen Einlaufbereich und dem röhrenförmigen Abschnitt jeweils um eigenständige Bauteile handelt, die zur Bildung des Grundkörpers der Durchmischungsvorrichtung miteinander verbunden sind, wobei der kegelförmige, röhrenförmige Abschnitt, d.h. dessen Wandung, eine Neigung zwischen 1:0,005 und 1:0,05 gegenüber der Vertikalen aufweist und der Öffnungswinkel des kegelförmigen Abschnitts sich damit in der Größenordnung von unter 5 % bewegt.

Diese Verbindung ist vorzugsweise lösbar.

Die lösbare Verbindung kann beispielsweise als unmittelbare Verbindung - etwa als eine Steckverbindung (bspw. durch Fügung beide Bauteile unter leichtem Untermaß/Presspassung), als Schnappverbindung (bspw. durch elastisch auslenkbare sich in Öffnung des Fügepartners erstreckende Schnappelemente) oder als Schraubverbindung (etwa mit umlaufendem Gewinde und Gegengewinde an dem unteren Ende des röhrenförmigen Abschnitts bzw. an dem oberen Ende des trichterförmigen Einlaufbereichs) oder als mittelbare Verbindung - d.h. unter Zuhilfenahme von Verbindungselementen wie Stiften oder Schrauben - ausgebildet sein.

Möglich sind auch nicht-lösbare Verbindungen wie bspw. durch Einsatz von Klebstoff oder gleichwirkenden Haftvermittlern, Schweißverbindungen und ähnlichem.

Durch eine zweiteilige Ausführung können die Bauteile der Durchmischungsvorrichtung unabhängig voneinander gefertigt werden, sie sind unabhängig voneinander transportierbar und können vor Ort und mit geringem Aufwand zu einer einsatzbereiten Durchmischungsvorrichtung gefügt und installiert werden.

Anbau- und Befestigungsteile, wie etwa Befestigungsanker, Verspannungsdrähte oder Zuführteile der Gaszuführung und andere Hilfsmittel sind nicht als Teile im Sinne des Begriffs "zweiteilig" zu fassen.

Der röhrenförmige Abschnitt ist kegelförmig, d.h. mit einem Kegelabschnitt mit einer schräg zulaufenden Mantelfläche, ausgeführt.

Hierdurch lassen sich röhrenförmige Abschnitte auf platzsparende Weise ineinander stapeln. Kegelförmig ist hierbei nicht streng mathematisch, sondern funktionell zu verstehen, so dass auch andere im mathematischen Sinne nicht kegelförmige Abschnitte, bspw. pyramidenförmig ausgestaltete Abschnitte, die aufgrund dieser Formgebung stapelbar sind, unter den Begriff ,kegelförmig' im Sinne der Erfindung fallen sollen.

Durch den kegelförmigen Aufbau des röhrenförmigen Abschnitts wird der Gasstrom aus der Vertikalen abgelenkt, und die Projektionsgrundfläche der Blasensäule wird vergrößert. Die im Grundriss betrachtete Fläche, welche durch die Blasensäule von Vertikalen Dichte unterschieden betroffen ist, wird erhöht und die Nachströmung von Wasserpaketen wird gegenüber einer rein geraden, rein vertikalen Mantelfläche ebenfalls erhöht. Die konische Mantelfläche bewirkt ein gleichförmiges Beschleunigen der Wasserpakete, wobei diese Beschleunigung durch das Quadrat des Verhältnisses der Durchmesser von Einlauf und Auslauf bestimmt wird. Diese Beschleunigung kann nur dadurch effizient erfolgen, dass der erste Anteil der Beschleunigung im Bereich des trichterförmigen Teils ohne Gasbeteiligung und sehr behutsam erfolgt und etwa auf 50 bis 100 % der Eintrittsgeschwindigkeit erfolgt. Erst danach kann durch die geneigte Mantelfläche und unter Einschluss der Blasensäule des Gases, welches in den röhrenförmigen Abschnitt eintritt, eine effiziente weitere Beschleunigung bis zur Austrittsgeschwindigkeit von z. B. 400 % der Eintrittsgeschwindigkeit erfolgen. Aus hydraulischen Studien ist bekannt, dass die Reibungsverluste in turbulenten Strömungen bei plötzlichen Geschwindigkeitsänderungen sich proportional zum Quadrat der Geschwindigkeitsdifferenzen verhalten, also z. B. bei einer Beschleunigung auf die Reibungsverluste auswirken. Grundsätzlich ist demnach eine konische Mantelform zu ziehen.

Der trichterförmige Einlaufbereich kann vorteilhaft verrundet, d.h. kantenfrei, ausgeführt sein, beispielsweise mit hyperbolischer oder parabolischer Kontur. Hierdurch lassen sich Strömungsverluste beim Einsaugen minimieren. Besonders bevorzugt ist der Einlaufbereich an seinem unteren Ende unter einem Winkel von maximal 45° oder weniger gegenüber der Vertikalen geneigt. Dies gewährleistet einen guten Kompromiss zwischen vertikaler und horizontaler Sogwirkung, so dass die Durchmischungsvorrichtung einen großen Wirkbereich (Bodenabdeckung) entfaltet, und gleichzeitig eine gute Durchmischung von angesaugtem Fluid und gegebenenfalls angesaugten Fremdstoffen, insb. Sedimenten, gewährleistet. Dies reduziert zugleich auch die Gefahr einer Verstopfung des Strömungskanals.

In zweckmäßiger Weise sind der Einlauf und der Auslauf aufeinander abgestimmt, und zwar so, dass die Einlauföffnung einen Öffnungsquerschnitt aufweist, der zweimal so groß ist wie der Öffnungsquerschnitt des Auslaufs. In anderen Worten ist es also vorteilhaft, wenn die Einlauföffnung wenigstens viermal die Fläche aufweist wie der Auslauf. Hierdurch können Änderungen in der Strömungsgeschwindigkeit, die durch die Querschnittsverengung vom Einlauf zum Auslauf eintreten, vorteilhaft begrenzt werden.

Strömungstechnisch vorteilhaft kann es weiter sein, wenn zumindest der röhrenförmige Abschnitt der Durchmischungsvorrichtung unterbrechungsfrei ausgeführt ist, d.h., dass der röhrenförmige Abschnitt (unter Absehung des Gasauslasses) eine geschlossene Mantelfläche ausbildet und Fluid nur über die Einlauföffnung und die Auslauföffnung in die bzw. aus der Durchmischungsvorrichtung gefördert werden kann. Optional kann auch der trichterförmige Einlaufbereich unterbrechungsfrei ausgeführt sein.

Durchmischungseffekte können weiter verbessert werden, wenn in der Durchmischungsvorrichtung eine Fluidleiteinrichtung vorgesehen ist, die das von unten nach oben gerichtete Strömungsfeld oder einen Teil davon zusätzlich in Drehung versetzt. Eine geeignete Fluidleiteinrichtung sind bspw. helixartige Einsätze, Wendel oder gegenüber der Längsachse schräg angestellte sich abschnittsweise von unten nach oben erstreckende Leitschaufeln.

In einer besonders zweckmäßigen Ausführung einer Fluidleiteinrichtung erstreckt diese sich zumindest teilweise unterhalb des Gasauslasses in Richtung des Einlaufs. Dies bewirkt, dass - analog eines Zyklons oder der Ablaufströmung in einer Badewanne - eine nach unten gerichtete Strömungsspirale entsteht, die sich über den Einlauf hinaus nach unten nach unten fortpflanzt, und so zu einer spiralförmigen Ansaugung am Boden des Fluidbehälters führt.

Um die Fluidleiteinrichtung konstruktiv einfach und damit kostengünstig herstellbar zu halten, kann die Fluidleiteinrichtung den Strömungskanal im Querschnitt nur unvollständig verdecken, insbesondere derart, dass sie sich außen entlang der Mantelfläche des Grundkörpers erstreckt, den Strömungskanal im Querschnitt gesehen jedoch nicht vollständig verdeckt, so dass ein zentrischer Teil des Strömungskanals offenbleibt, durch den das Fluid sowie über den Gasauslass eingebrachtes Gas auf direktem Wege von dem Einlauf zu dem Auslauf strömen kann. Dies ermöglicht es, auf konstruktiv aufwendige Gestaltungen, insb. durchgängige archimedische Schrauben, verzichten zu können, ohne auf den Vorteil einer spiralförmigen Ansaugung im Einlaufbereich sowie unterhalb davon verzichten zu müssen.

Die Fluidleiteinrichtung ist hierfür vorzugsweise mehrteilig als eine Vielzahl von Leitschaufeln ausgeführt, die sich jeweils abschnittsweise wendelartig entlang der Mantelfläche des Grundkörpers der Durchmischungsvorrichtung emporwinden.

Die Fluidleiteinrichtung bzw. ihre Teile sind vorteilhaft lösbar mit bzw. an dem hohlleiterartigen Grundkörper der Durchmischungsvorrichtung befestigt, bspw. angeschraubt.

Als separat ausgeführte und erst nachträglich angefügte Bauteile behindern diese dann insb. die Stapelbarkeit von röhrenförmigen Abschnitte nicht, wenn diese kegelförmig ausgeführt sind.

Um die Wartungsintensität zu verringern, ist der Gasauslass der Durchmischungsvorrichtung vorteilhaft so angeordnet, dass er unmittelbar in die Mantelfläche des röhrenförmigen Abschnittes mündet und praktisch bündig mit der Mantelfläche abschließt, ohne wesentlich in den Strömungskanal hineinzuragen. Hierdurch wird vermieden, dass sich mit dem Fluid mittransportierte Feststoffe oder Sedimentanteile an dem Gasauslass verfangen oder an diesem anwachsen können. Reinigungsintervalle für die Durchmischungsvorrichtung können hierdurch verringert, wenn nicht sogar gänzlich abgeschafft werden. Ein bündiges Abschließen im Sinne der Erfindung ist insb. dann gegeben, wenn der Gasauslass um nicht mehr als 15%, bevorzugt weniger als 10%, weiter bevorzugt nicht mehr als 5 % und besonders bevorzugt nicht mehr als 2% des Durchmessers der Durchmischungsvorrichtung auf Höhe des Gasauslasses in den Strömungskanal hervorsteht.

Bei dem Gasauslass der Durchmischungsvorrichtung handelt es sich vorzugsweise um genau einen Gasauslass mit vorzugsweise kreisförmiger Kontur. Der Gasauslass kann darüber hinaus vergittert sein, um ein Eindringen von Fremdstoffen in die Gaszuführung zuverlässig zu verhindern, weist jedoch keine sonstigen Luftverteilungseinrichtungen auf.

Für einen optimalen Saugeffekt ist der Gasauslass auf zweckmäßiger Höhe in der Durchmischungsvorrichtung angeordnet, insb. auf einer Höhe, die sich - bezogen auf die Gesamtlänge der Durchmischungsvorrichtung - in der unteren Hälfte, bevorzugt dem unteren Drittel, der Durchmischungsvorrichtung befindet und bspw. einen Abstand zwischen 20 und 150cm zum Einlauf aufweist.

Bevorzugt ist es, wenn die Durchmischungsvorrichtung etwa eine Länge zwischen 1,5 und 4m aufweist. Hierdurch kann die Durchmischungsvorrichtung zweckmäßig in gängigen Fluidbehältern (Becken) mit Höhen zwischen 2 bis 6m eingesetzt werden. Bevorzugt ist auch, wenn die Gesamtlänge der Durchmischungsvorrichtung mindestens das Vierfache des Öffnungsquerschnitts des Auslaufs beträgt.

Teile der Durchmischungsvorrichtung können aus einem Metall, einem Kunststoff oder auch einer Keramik gefertigt sein. Bevorzugt ist jedoch, wenn wenigstens der Einlaufbereich aus einem Kunststoff, insbesondere einem Duromer oder Thermoplast, gefertigt ist. Dies erlaubt eine hohe Gestaltungsfreiheit in der Formgebung bei günstigen Herstellungskosten, leichtes Gewicht und eine hohe Standzeit auch in widrigem Umgebungsmilieu. Aus analogen Gründen kann auch der röhrenförmige Abschnitt aus einem Kunststoff gefertigt sein. Der Kunststoff ist vorzugsweise faserverstärkt.

Unter einem anderen Aspekt betrifft die Erfindung auch die Verwendung der vorbeschriebenen Durchmischungsvorrichtung in einer Wasserbehandlungsvorrichtung, d.h. der Installation der Durchmischungsvorrichtung in einem mit Wasser gefüllten Fluidbehälter oder Becken zur Behandlung des Wassers, insb. zur Behandlung von Abwasser oder zur Aufbereitung von Trinkwasser.

Durch eine Verwendung in einer Wasserbehandlungsvorrichtung ist es möglich, eingebrachte Gase gleichmäßig und möglichst homogen mit dem Wasser zu vermischen und in dem Wasserbehälter zu verteilen, bspw. um gewünschte Folgeprozesse zu initiieren bzw. zu beschleunigen. Die Durchmischungsvorrichtung kann sonst übliche zu diesem Behuf verwendete mechanische Rührwerke und/oder eine Vielzahl von über den Wasserbehälter verteilten Gasauslässen ersetzen. Dies erspart bekannte Nachteile dieser Alternativen. Z.B. sind mechanische Rührwerke kostenintensiv, fehleranfällig und nicht für jede Wasserbehältergeometrie geeignet. Eine Vielzahl von Gasauslässen ist aufgrund der vielen, zusätzlich notwendigen Leitungen materialintensiv. Beide Alternativen sind außerdem wartungs- und reinigungsintensiv.

In einer zweckmäßigen Variante kann die Durchmischungsvorrichtung in einer Wasserbehandlungsvorrichtung verwendet werden, die zwei oder mehr Fluidbehälter umfasst, die jeweils mit einem Gas beaufschlagt werden sollen.

Wie weiter oben bereits angedeutet, ist ein in Wasserbehandlungsvorrichtungen vielfach eingesetzter Verfahrensschritt das kontrollierte Einbringen von Gasen in das zu behandelnde Wasser zum Einleiten und Beschleunigen eines chemischen, biologischen oder chemobiologischen und/oder physikalischen Prozesses, beispielsweise dem Einbringen von Luftsauerstoff zur Oxidation von im Wasser enthaltenen Inhaltsstoffen oder der Entfernung von gelösten, übersättigten Gasen wie CO₂ oder CH₄. In diesem Zusammenhang ist es u.a. bekannt, über Stabbelüfter, d.h. Lanzen, unter Druck gesetzten Sauerstoff kontrolliert in Wasserbehälter einzubringen.

Eine solche Wasserbehandlungsvorrichtung und ein dazugehöriges Sequence-Batch-Reactor-Verfahren zeigt die US-amerikanische Offenlegungsschrift US 4 663 044 A. Die US 4 663 044 A zeigt insbesondere das Einblasen von Luftsauerstoff in unterschiedliche (Ab-)Wasserbehälter A, B, C über ein bodennah angebrachtes Luftverteilersystem mit mehreren Auslässen 114, 122, 132, die über eine Luftzuführeinrichtung 112 mit Druckluft versorgt werden, wobei die (Ab)Wasserbehälter mit Wasser gefüllt sind, das sich in unterschiedlichen Behandlungsphasen befindet.

Nachteilig an derartigen Wasserbehandlungsvorrichtungen mit mehreren Fluidbehältern ist, dass die in die einzelnen Behälter zugeführte Druckluft nicht regelbar ist, wenngleich dies aufgrund unterschiedlicher Behandlungsphasen des Abwassers grundsätzlich wünschenswert wäre. Eine entsprechende Regelungseinrichtung mit steuerbaren Regelventilen in der bzw. den Zuführleitungen wäre jedoch mit hohen Kosten verbunden.

Vor diesem Hintergrund hat sich der Einsatz der erfindungsgemäßen Durchmischungsvorrichtung in der nachfolgend noch näher beschriebenen Wasserbehandlungsvorrichtung als überraschender zweckmäßig erwiesen, da einerseits eine schnelle, gleichmäßige und möglichst vollständige Durchmischung von in das Wasser eingebrachten Gasen möglich ist und anderseits die Gaseinbringung unter vergleichweise geringem Energieaufwand erfolgen kann. Die Gaseinbringung unter Druck ist einer der wesentlichen Energiekostentreiber in einer Wasserbehandlungsvorrichtung. Schließlich ist es auch möglich, die Gaseinbringung in unterschiedliche Wasserbehälter geregelt, jedoch ohne Regelaufwand zu bewerkstelligen.

Die Wasserbehandlungsvorrichtung zur Wasserbehandlung, insb. zur biologischen Behandlung und Aufbereitung von Abwässern mittels Belebtschlamm, umfasst im Einzelnen wenigstens zwei fluidisch miteinander verbundene Fluidbehälter, nämlich einen ersten Fluidbehälter (Selektor) und einen zweiten Fluidbehälter (Reaktor), zwischen denen kontinuierlich oder diskontinuierlich (batch-weise) Wasser ausgetauscht und transferiert werden kann. Der Wassertausch erfolgt dabei über eine zwischen den Fluidbehältern angeordneten Überlaufkante, so dass Wasser ab einem vorgegebenen Füllstand in dem Selektor von dem Selektor in den Reaktor überläuft. Der Wasserfluss erfolgt im Wesentlichen also unidirektional von dem Selektor in den Reaktor, wobei der Reaktor mit zu behandelndem Wasser beschickt und das behandelte Wasser aus dem Reaktor abgezogen werden kann. Die Überlaufkante wird dabei von einer Oberseite einer den ersten und zweiten Fluidbehälter trennenden Trennwand gebildet.

Der erste und der zweite Fluidbehälter weisen eine entsprechende erste bzw. zweite Gaszuführung mit einem oder mehreren ersten bzw. zweiten Gasauslässen, bspw. in Form von in die Fluidbehälter eingetauchten ersten bzw. zweiten Gaslanzen, auf, die aus einer gemeinsamen Gasquelle mit einem unter Druck stehenden Gas (Druckgas) versorgt werden und über die das Druckgas in die Fluidbehälter eingetragen wird. Die Gasauslässe sind auf einer bestimmten, vertikalen Höhe gegenüber den jeweiligen Fluidbehälterböden angeordnet.

Bei dem Druckgas kann es sich um Druckluft, d.h. atmosphärisch gewonnene und komprimierte Umgebungsluft, handeln. Es kann sich jedoch auch um ein anderes Gas, insb. prozesstechnisch gewonnenes Industriegas wie CO₂, O₂ oder N₂, handeln.

Die Wasserbehandlungsvorrichtung zeichnet sich dadurch aus, dass der erste Fluidbehälter, der Selektor, die erfindungsgemäße Durchmischungsvorrichtung umfasst. Die Durchmischungsrichtung ist vertikal, d.h. stehend, in dem ersten Fluidbehälter angeordnet, so dass der Strömungskanal der Durchmischungsvorrichtung sich im Wesentlichen vertikal erstreckt und in einer Strömungsrichtung von unten nach oben durchströmt wird.

Die Wasserbehandlungsvorrichtung zeichnet sich ferner dadurch aus, dass der vertikale Abstand der Gaszuführung des Selektors zu dessen Boden größer ist als der vertikale Abstand des Gasauslasses der Gaszuführung des Reaktors zu dessen Boden, so dass bei gleichem Füllstand von Reaktor und Selektor der hydrostatische Druck am Gasauslass des Selektors geringer ist als der hydrostatische Druck am Gasauslass des Reaktors. Dadurch wird gewährleistet, dass für jeden beliebigen Füllstand des Selektors, der größer oder gleich dem Füllstand des Reaktors ist, eine Gaszuführung in den Selektor gewährleistet ist. Füllstand ist dabei volumenunabhängig zu verstehen im Sinne einer Füllhöhe oder eines Pegelstandes des Fluidbehälters, nicht jedoch im Sinne eines Füllvolumens.

In anderen Worten kommt es nur darauf an, dass sich über dem Gasauslass der Durchmischungsvorrichtung in dem Selektor stets eine kleinere oder maximal gleich hohe Wassersäule wie über dem Gasauslass des Reaktors befindet - also ein geringerer hydrostatischer Druck wirkt -, so dass bei jedem Füllstandsverhältnis von Selektor zu Reaktor eine (Mindest-)Gaszuführung in den Selektor gewährleistet ist.

Diese Anordnung birgt u.a. den Vorteil, dass das in den Fluidbehältern befindliche Wasser, welches sich in unterschiedlichen Behandlungsstufen befinden kann, mit unterschiedlichen Gasmengen aus derselben Gasquelle beaufschlagt werden kann, ohne dass zur Verteilung und Einstellung der Gasmenge bzw. der Gasmengenverhältnisse, die aus dem ersten bzw. zweiten Gasauslass strömen bzw. strömen sollen, eine Druckminderung (Ventile, Sperrklappen) vonnöten ist. Hierdurch kann der Gesamtbedarf an Druckluft reduziert und damit Energiekosten eingespart werden.

In einer zweckmäßigen Variante kann die Wasserbehandlungsvorrichtung in unterschiedlichen Phasen betrieben werden, nämlich einer Beschickungsphase (Befüllungsphase), einer Gaszuführungsphase, einer Sedimentationsphase sowie einer Abzugsphase (Dekantierphase). Die einzelnen Phasen können hintereinander durchgeführt werden. Die Beschickungsphase kann jedoch auch gleichzeitig oder zumindest teilweise überlappend mit der Gaszuführungsphase durchgeführt werden. Die Beschickungsphase kann auch mit allen anderen Phasen teilweise oder komplett überlappen.

In der Beschickungsphase wird der erste Fluidbehälter mit zu behandelndem Wasser beschickt, d.h. befüllt. Über die Überlaufkante läuft das im ersten Fluidbehälter ggfs. bereits teilweise oder vollständig vorbehandelte Wasser dann in den zweiten Fluidbehälter über. In der Gaszuführungsphase wird dem in dem ersten und zweiten Fluidbehälter befindlichen Wasser über die Gasauslässe Gas, insb. komprimierte Umgebungsluft, zugeführt. Die Gaszuführung kann sich zeitlich vollständig oder zumindest teilweise mit der Beschickungsphase überdecken. Ferner sorgt die Positionierung des ersten Gasauslasses, der in die Durchmischungsvorrichtung mündet, für einen Sog in die Durchmischungsvorrichtung, so dass einlaufnahes Wasser in dem ersten Fluidbehälter über die Einlauföffnung eingesogen, mit dem eingebrachten Gas vermischt und über die Auslauföffnung der Durchmischungsvorrichtung wieder in den ersten Fluidbehälter rückgespeist wird. Hierdurch wird neben einer guten Durchmischung des Wassers mit dem Gas auch eine gute Durchmischung unterschiedlicher Wasserschichten und ggfs. auch von Wasser mit etwaigen am Boden des Fluidbehälters lagernden Sedimenten, wie etwa Biomasse oder Belebtschlamm, erreicht. In der Sedimentationsphase wird die Luftzuführung und ggfs. die noch andauernde Beschickung mit Wasser unterbrochen, so dass im Wasser befindliche Partikelagglomerationen, die schwerer sind als Wasser, in dem ersten bzw. zweiten Fluidbehälter zu Boden sinken können (sedimentieren) und dort eine mit der Zeit anwachsende und dicker (höher) werdende Sedimentschicht bilden. In der Abzugsphase wird schließlich über eine Abzugsvorrichtung im Wesentlichen partikelagglomerationsfreies oder zumindest partikelagglomerationsarmes Wasser aus den höchstgelegenen Wasserschichten, d.h. aus den von der Sedimentationsschicht am weitesten entfernten Schichten, über eine Abzugsvorrichtung aus dem zweiten Fluidbehälter abgezogen (dekantiert). Während der Abzugsphase sinkt der Pegelstand in dem zweiten Behälter. Die Summe dieser vier Phasen (Beschickung, Gaszuführung, Sedimentation, Abzug) bildet einen Zyklus. Das abgezogene Wasser bildet das Endprodukt und kann weiteren Nachbehandlungsschritten unterzogen werden.

In einer konkreten Ausführungsform kann es sich bei der Wasserbehandlungsvorrichtung um eine Abwasserbehandlungsvorrichtung zur Behandlung von Abwasser, bspw. Haushalts- oder auch Industrieabwässern, handeln, bei der das zu behandelnde Abwasser von Schadstoffen und Verunreinigungen gereinigt werden soll. Typischerweise gelangt das Abwasser nach mechanischen Vorbehandlungsstufen, in denen zumindest grobe Verunreinigungen und Schmutzpartikel (Treibgut, Fremdkörper, Sand und Geröll, etc.) über Rechen und Sandfänge herausgefiltert werden, in der Beschickungsphase in den ersten Fluidbehälter, wobei der Pegelstand beim ersten Befüllen beständig steigt, bis der Pegelstand die Überlaufkante zwischen dem ersten und dem zweiten Fluidbehälter erreicht und anschließend, d.h. bei Überschreiten der Höhe der Überlaufkante, in den zweiten Fluidbehälter überläuft. Die Beschickung (Befüllung) des Abwassers in den ersten Fluidbehälter kann dabei kontinuierlich oder auch stoßweise erfolgen, so dass auch die Zuführung des Abwassers von dem ersten in den zweiten Fluidbehälter über die Überlaufkante kontinuierlich oder stoßweise erfolgt.

Während der Belüftungsphase wird das Abwasser über die Gasauslässe sowohl im ersten als auch im zweiten Fluidbehälter mit Druckluft, d.h. unter Druck gesetzter Umgebungsluft, beaufschlagt. Hierdurch können Oxidationsprozesse, insbesondere die Umwandlung von Kohlenstoffverbindungen in Kohlendioxid und Wasser oder die Umsetzung von Ammonium zu Nitrat (Nitrifikation) beschleunigt werden. Die Oxidationsprozesse können dabei von Mikroorganismen unterstützt werden, die sich in den Fluidbehältern anreichern, Verunreinigungen verstoffwechseln und in Partikelagglomerationen binden. Diese aus Verunreinigungen, Stoffwechselprodukten und Mikroorganismen bestehende Partikelagglomerationen bilden sog. Belebtschlamm, der insb. in der nachfolgenden Sedimentationsphase zu Boden sinkt und die beständig wachsende Sedimentationsschicht bildet. Wie bereits oben dargestellt, gewährleistet die Gaszuführung über die Durchmischungsvorrichtung eine exzellente Vermischung von unterschiedlichen Wasserschichten, insb. von altem Wasser sowie während der Beschickung neu hinzukommendem Wasser, der Verteilung von Belebtschlamm sowie einer homogenen Verteilung der eingebrachten Luft in dem ersten Fluidbehälter. Ein separates Rührwerk für die Durchmischung ist nicht erforderlich. Auch eine separate Gasverteilungsvorrichtung wie bspw. ein aktiver Druckminder oder ein Druckregelventil ist nicht erforderlich, da - vorausgesetzt, es handelt sich um einen bekannten Prozess mit bekannten Prozessparametern - das Abwasser in dem ersten Fluidbehälter bei einer bekannten, durchschnittlichen Aufenthaltsdauer einen bekannten Gasbedarf für die gewünschten Durchmischungs- und/oder Oxidationsprozesse hat, der in einem näherungsweise festen Verhältnis zum Gasbedarf im zweiten Fluidbehälter steht, so dass die in den ersten und den zweiten Fluidbehälter einzubringendes Gas einem näherungsweise konstanten Verhältnis unterworfen ist, bspw. einem Verhältnis von 30:70. Dieses gewünschte Verhältnis kann technisch über die unterschiedliche, hydrostatische Höhe der Gasauslässe in dem ersten bzw. zweiten Fluidbehälter abgebildet bzw. zumindest angenähert werden. Unter "hydrostatischer Höhe" ist dabei der vertikale Abstand der Gasauslässe von dem Pegelstand der Fluidbehälter zu verstehen, wenn beide Fluidbehälter dieselbe Wasserlinie aufweisen. Ein geringfügiges Abweichen der Drucklufteintragung infolge des schwankenden (nach der Abzugsphase wieder ansteigenden) Füllstands in dem zweiten Fluidbehälter tut dem, insb. da dies zeitlich auf die Dauer der Beschickungsphase beschränkt ist, keinen Abbruch.

Vorteilhaft kann es für die Wasserbehandlungsvorrichtung - und speziell für die o.g. Abwasserbehandlungsvorrichtung - auch sein, das Verhältnis der Gaszuführung in den ersten bzw. zweiten Fluidbehälter nicht ausschließlich über die hydrostatische Höhe der Gasauslässe, sondern zusätzlich auch über Rohrleitungsquerschnitte der zu den Gasauslässen führenden Gaszuführungen (permanent) einzustellen. Zweckmäßig ist es bspw., wenn ein maximaler Rohrleitungsquerschnitt der Gaszuführung in den ersten Fluidbehälter (Selektor) um einen Faktor von 2, 3 oder 5 kleiner ausgeführt ist, als ein maximaler Rohrleitungsquerschnitt der Gaszuführung in den zweiten Fluidbehälter. Hierdurch ist eine weitergehende Justierung der Gaszuführmengen möglich, da die Einstellung von Gaszuführmengen über Leitungsquerschnitte und über die hydrostatische Höhe jeweils anderen physikalischen Gesetzmäßigkeiten unterliegen. Hierdurch kann insb. auch bei stark divergierenden Füllständen zwischen ersten und zweitem Fluidbehälter stets eine minimale Gaszuführung in den ersten sowie dem zweiten Fluidbehälter gewährleistet werden. Die Möglichkeit, die hydrostatische Höhe der Gaszufuhr durch unterschiedliche Positionierung des Gasauslasses zu variieren oder anzupassen, bleibt unbenommen. Die hydrostatische Höhe der Gaszufuhr ist also nicht notwendigerweise starr, sondern kann an die Gegebenheiten angepasst werden, beispielsweise, indem eine Vielzahl von auf unterschiedlichen Höhen befindlichen Blindanschlüssen an der Vorrichtung vorgesehen werden, von denen nur einer mit der Gasquelle verbunden wird/ist. Der hier verwendete Begriff der Anpassung meint vorliegend die Anpassung der hydrostatischen Höhe bei Installation und/oder Wartung der Vorrichtung, nicht jedoch im laufenden Betrieb der Vorrichtung. Eine adaptive Anpassung der hydrostatischen Höhe des Gasauslasses im laufenden Betrieb - etwa durch elektromotorische, hydraulische oder pneumatische Antriebsmittel - ist jedoch möglich.

In einer besonders zweckmäßigen Ausführung der Wasserbehandlungsvorrichtung kann auf jedwede aktiven Druckregelelemente zur Verteilung der dem ersten und dem zweiten Fluidbehälter zugeführten Gasmengen vollständig verzichtet werden. Dabei wird vorausgesetzt, dass der erste und der zweite Gasauslass aus derselben Gasquelle versorgt werden, d.h. die Gasquelle eine Zuführleitung aufweist, von der die zu dem ersten bzw. zweiten Gasauslass führenden Gaszuführungen abzweigen, ohne dass in diesen Gaszuführungen Drosselventile oder andere aktive Stellelemente (wie Volumenregler oder Druckregler) angeordnet sind, die während des Betriebs der Wasserbehandlungsvorrichtung verstellbar sind. Absperrventile, welche einen dauerhaften Verschluss einer Gaszuführung z.B. für Wartungszwecke ermöglichen, sind nicht als aktives Stellelement im vorgenannten Sinne zu verstehen.

Die Durchmischungsvorrichtung weist zweckmäßig eine bestimmte Positionierung und bestimmte Abmessungen auf:
Die Durchmischungsvorrichtung ist zweckmäßig unterhalb des Flüssigkeitsspiegels angeordnet, befindet sich also ,unter Wasser'. Hierdurch können insb. Emissionen und Immissionen von Luft und Lärm reduziert werden. Besonders bevorzugt befindet sich die Durchmischungsvorrichtung wenigstens 100cm unterhalb des Flüssigkeitsspiegels des ersten Fluidbehälters. Hierdurch können insb. mittlere Wasserschichten mit dem Gas sowie vom Boden angesaugten Ablagerungen (Belebtschlamm) durchmischt werden. Dies kann Umsetzungsraten (Oxidationsprozesse) beschleunigen, da oberflächennahe Wasserschichten ohnehin auf natürliche Art und Weise mit der Umgebungsluft in Kontakt stehen und deshalb bereits mit Sauerstoff gesättigt ist, so dass durch eine hinreichend tiefe Positionierung der Durchmischungsvorrichtung unter Wasser die Gesamtmenge an im Wasser verfügbarem Sauerstoff erhöht werden kann.

Die Durchmischungsvorrichtung weist vorteilhaft eine Gesamtlänge auf, die zwischen 30% und 80%, bevorzugt zwischen 60% und 70% der Gesamthöhe des ersten Fluidbehälters beträgt. Über eine so ausgewählte Länge kann gewährleistet werden, dass eine nahezu vollständige Durchmischung aller Wasserschichten, insb. der unteren mit den weiter oben gelegenen Wasserschichten, erfolgt. Unter Gesamtlänge ist dabei der Abstand zwischen dem (unteren) Einlauf und dem (oberen) Auslauf zu verstehen.

Vorzugswürdig kann es sein, die Durchmischungsvorrichtung bodennah anzuordnen, insb. so, dass die Einlauföffnung der Durchmischungsvorrichtung sich in Bodennähe des Bodens des ersten Fluidbehälters, bevorzugt in einem Abstand zwischen 5 und 50cm, befindet. Ein so gewählter Abstand gewährleistet einerseits einen ausreichenden Abstand zu einer sich am Boden ablagernden Sedimentschicht, so dass der Einlauf zu keinem Zeitpunkt durch die Sedimente blockiert oder verstopft wird, anderseits, dass die Sedimentschicht während der Gaszuführungsphase aufgewirbelt, angesogen und durch den Strömungskanal der Durchmischungsvorrichtung in höhere Wasserschichten transportiert werden kann.

Vorteilhaft ist es, wenn der Gasauslass des zweiten Fluidbehälters sich ebenfalls in Bodennähe, hier des Bodens des zweiten Fluidbehälters, befindet. Zweckmäßig ist der zweite Gasauslass dabei bodennah in einem Abstand von nicht mehr als 30cm zum Boden des zweiten Fluidbehälters angeordnet. Der zweite Gasauslass ist dabei vorzugsweise - anders als der in die Durchmischungsvorrichtung mündende Gasauslass des ersten Fluidbehälters - als fein perforierte, multiple Auslassöffnung ausgebildet. Die fein perforierte, multiple Auslassöffnung kann teller- oder scheibenförmig, balkenförmig oder röhrenförmig ausgebildet sein. Sie kann auch in eine Vielzahl von jeweils teller-, röhren- oder balkenförmigen Gruppierungen oder Stränge gegliedert sein. Es ist möglich, dass die Gasauslässe aus feinporösen Materialien, etwa aus perforiertem Kunststoff oder porösen, mineralischen Stoffen gebildet sind oder diese umfassen, die das ausströmende Gas in kleine Gasblasen zerteilen.

In einer vorteilhaften Weiterentwicklung sind die Böden des ersten und zweiten Fluidbehälters im Wesentlichen auf derselben geodätischen Höhe angeordnet und vorzugsweise flach, d.h. eben, ausgebildet. Dies reduziert die Baukosten für eine Wasseraufbereitungsanlage.

Weitere mögliche vorteilhafte Ausgestaltungen der vorgenannten Durchmischungsvorrichtung werden nachfolgend erläutert. Dabei kann die Durchmischungsvorrichtung in einer vorgenannten Wasserbehandlungsvorrichtung eingesetzt werden. Denkbar ist jedoch auch, die Durchmischungsvorrichtung in anderen Anwendungsfeldern, d.h. unabhängig von einer Wasserbehandlungsvorrichtung, einzusetzen. Eine Beschränkung der Durchmischungsvorrichtung auf eine Verwendung in einer Wasserbehandlungsvorrichtung ist daher nicht intendiert; vielmehr dienen etwaige Verwendungsangaben lediglich einer beispielhaften Erläuterung eines (von mehreren) möglichen Verwendungszwecken.

Die unterschiedlichen Aspekte der Erfindung werden nachfolgend anhand der beiliegenden Figuren beispielhaft erläutert, wobei gleiche oder vergleichbare Bauteile mit gleichen oder vergleichbaren Bezugszeichen versehen sind, so dass auf jeweils vor- und/oder nachstehende Erläuterungen zu diesen Bezugszeichen wechselseitig Bezug genommen wird.

Dabei zeigen
- **Fig. 1**: eine Schemaskizze einer Wasserbehandlungsvorrichtung,
- **Fig. 2**: eine Schemaskizze einer erfindungsgemäßen Durchmischungsvorrichtung,
- **Fig. 3**: eine Schnittansicht (Fig. 3A), eine Explosionsdarstellung (Fig. 3B) sowie eine Aufsicht (Fig. 3C) der erfindungsgemäßen Durchmischungsvorrichtung aus Fig. 2,
- **Fig. 4**: eine Schemaskizze in zwei Zuständen (Fig. 4A und 4B) einer Wasserbehandlungsvorrichtung mit unterschiedlich tiefen Fluidbehältern,
- **Fig. 5**: eine Schemaskizze analog Fig. 4 bei Einsatz einer erfindungsgemäßen Durchmischungsvorrichtung, sowie
- **Fig. 6**: eine Schemaskizze analog den Fig. 4 und 5 bei Einsatz einer erfindungsgemäßen Durchmischungsvorrichtung.

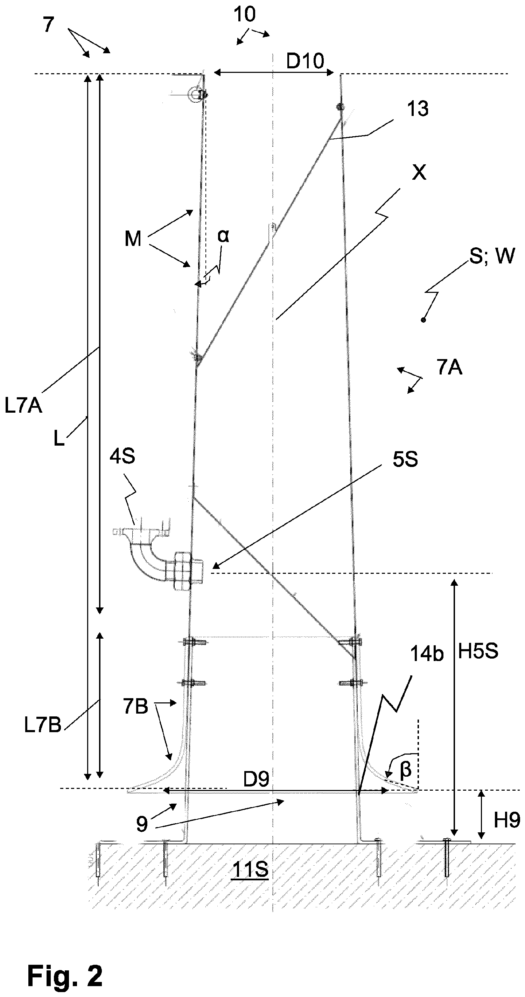

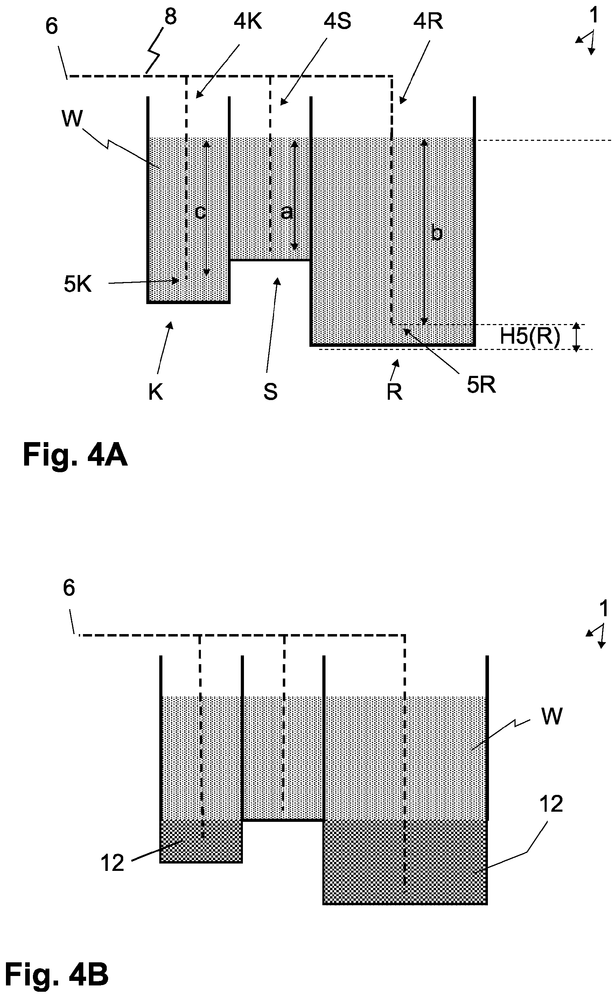

Für ein besseres Verständnis für einen möglichen Einsatzzweck der Erfindung in einer Wasserbehandlungsvorrichtung sollen anhand der Fig. 4A und 4B zunächst einige Grundproblematiken in der Wasserbehandlung holzschnitzartig erläutert werden, bevor insb. mit den Fig. 2 bis 3C auf die eigentliche Erfindung eingegangen wird. Ein möglicher Einsatzzweck wird nachfolgend anhand einer Abwasserbehandlung dargelegt, kann jedoch *mutatis mutandis* auch auf andere Anwendungsgebiete ausgeweitet werden.

Die in den Fig. 4A und 4B gezeigten Schemazeichnungen stellen drei fluidisch in Serie geschaltete Fluidbehälter dar, die nachfolgend als Selektor S, Kaptor K und Reaktor R bezeichnet werden. Alle drei Fluidbehälter S, K, R sind mit einem Fluid, hier dem Wasser W, gefüllt und weisen jeweils eine in die Fluidbehälter vertikal hineinreichende Gaszuführung 4K, 4S, 4R mit an ihrem jeweiligen, unteren Ende befindlichen Gasauslässen 5K, 5R, 5S auf. Über die Gasauslässe 5K, 5R, 5S kann ein Gas, hier komprimierte Umgebungsluft (Druckluft), in die Fluidbehälter S, K, Reingebracht werden. Die drei Gaszuführungen 4K, 4S, 4R sind über eine Zuführleitung 8 parallel geschaltet und mit derselben Gasquelle 6 verbunden.

Wie aus den Figuren ersichtlich, sind die drei Fluidbehälter S, K, R unterschiedlich tief. Die Böden (ohne Bezugszeichen) der Fluidbehälter S, K, R weisen also eine unterschiedliche geodätische Höhe auf. Alle Gasauslässe sind auf gleichem Abstand zu den jeweiligen Böden der Fluidbehälter S, K, R angeordnet und weisen in der Folge ebenfalls eine unterschiedliche geodätische Höhe auf. Gleichzeitig weisen die Fluidbehälter S, K, R eine gleiche Wasserlinie (Füllstand, Pegelstand) auf.

Dies hat zur Folge, dass bei Aktivierung der Gasquelle das Verhältnis der eingebrachten Gasmengen in die Fluidbehälter S, K, R abhängig von dem jeweiligen am Gasauslass 5K, 5S, 5R wirkenden hydrostatischen Druck ist, was im Wesentlichen also den über den Gasauslässen befindlichen Wassersäulen entspricht, vgl. die hydrostatischen Höhen a, b, c in Fig. 4A. Da der hydrostatische Druck im mittleren Fluidbehälter S am geringsten ist, strömt die Luft bevorzugt in den mittleren Fluidbehälter S, während in den linken Fluidbehälter K weniger und in den rechten Fluidbehälter R so gut wie keine Luft eingetragen wird. Dies hat unerwünschte Ablagerungen 12 am Boden der nicht bzw. nur schlecht belüfteten Fluidbehältern K und R zur Folge, wie es in Fig. 4B skizziert ist.

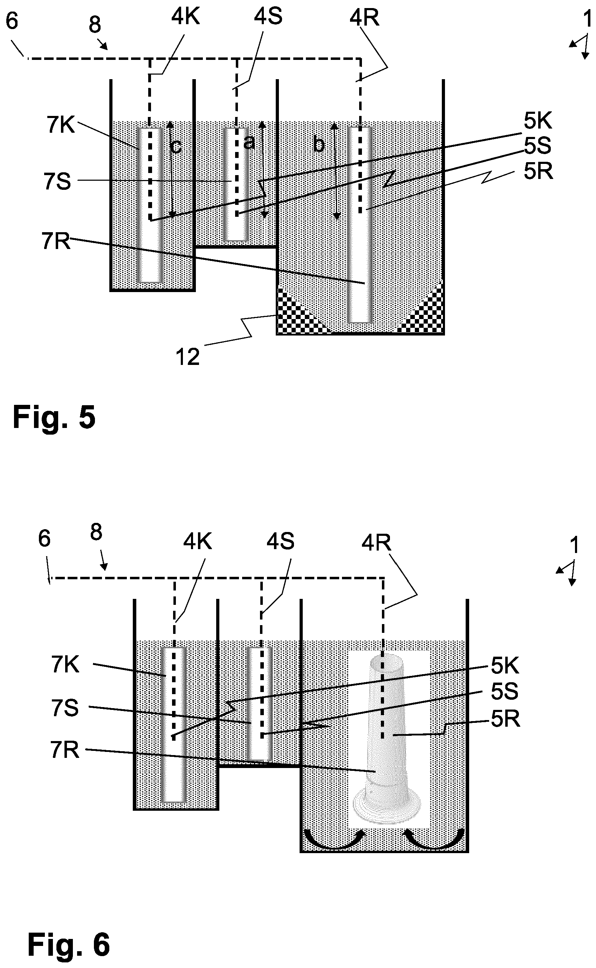

Um auf aufwendige Regeleinrichtungen, bei der für jede Gaszuführung der Zuführdruck unter Berücksichtigung des jeweiligen hydrostatisch an den Gasauslässen 5K, 5S, 5R wirkenden Drucks durch z.B. Druckminderer, angepasst wird, verzichten zu können, können auch als Druckluftheber bezeichnete Mammutpumpen 7K, 7R, 7S eingesetzt werden, die in den Ausführungsbeispielen der Fig. 5 und Fig. 6 jeweils vollständig in die Fluidbehälter K, S, R eingebracht sind und bis in die Nähe des jeweiligen Fluidbehälterbodens reichen.

Bei Mammutpumpen handelt es sich im einfachsten Fall um simple Rohre, in die auf bestimmter Höhe jeweils eine Gaszuführung mit einem Gasauslass eingebracht ist. Die Gasauslässe 5R, 5K, 5S sind in den Ausführungsbeispielen der Fig. 5 und 6 jeweils auf derselben geodätischen Höhe angebracht, weshalb die Druckverhältnisse an/bei allen Gasauslässen 5R, 5K, 5S dieselben sind. Hierdurch ist die Gaseintragsmenge in alle Fluidbehälter K, S, R gleich.

In den Mammutpumpen 7K, 7R, 7S kann sich das unter Druck eingebrachte Gas entspannen, steigt nach oben und erzeugt so einen Sog, der vermittels der Rohre bis auf Bodenhöhe der Fluidbehälter K, S, R wirkt, die unteren Wasserschichten gemeinsam mit allfällig dort vorhandenen Sedimenten von unten nach oben fördert und so die unteren Wasserschichten mit den oberen Wasserschichten durchmischt. Die Mammutpumpen können deshalb auch als Durchmischungsvorrichtung bezeichnet werden.

Durch die unterschiedlichen Längen der Mammutpumpen können selbst unterschiedlich tiefe Fluidbehälter aus einer gemeinsamen Gasquelle ohne zwischengeschaltete Druckregeleinrichtungen mit einem Gas aus derselben Gasquelle versorgt werden.

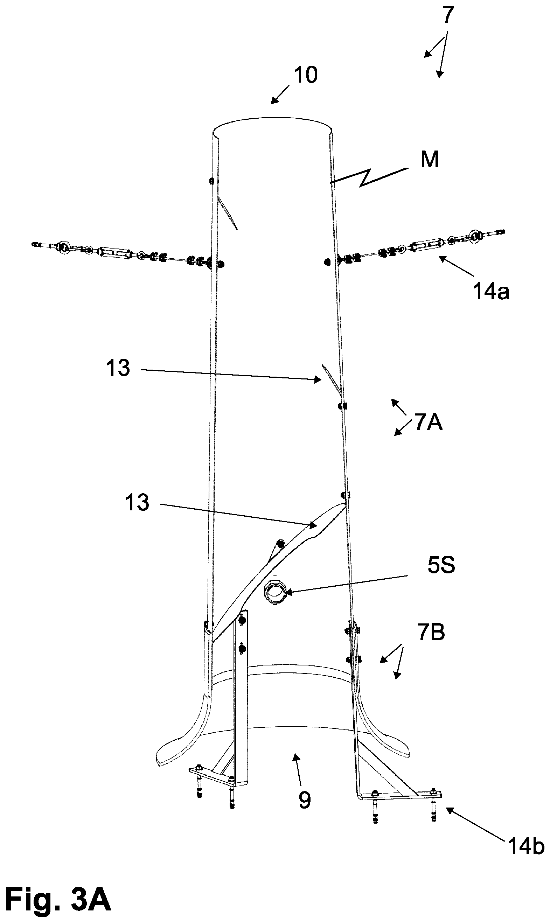

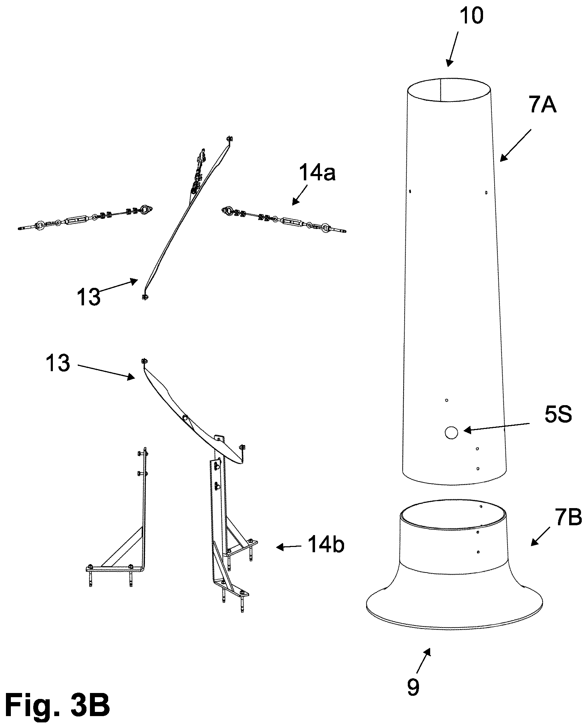

Fig. 6 zeigt eine Variante des Ausführungsbeispiels aus Fig. 5, die sich im Wesentlichen nur durch die spezielle Art der in dem Fluidbehälter S eingesetzten Mammutpumpe 7R gegenüber der Mammutpumpe 7R im Ausführungsbeispiel der Fig. 5 unterscheidet. Die Mammutpumpe 7R ist im Gegensatz zu den übrigen, rohrförmigen (hohlzylindrischen) Mammutpumpen 7K, 7S an ihrem unteren Ende mit einem trompetenartigen Einlauf versehen, welcher die Ansaugwirkung bzw. das Einzugsgebiet wesentlich vergrößert, so dass - anders als im Ausführungsbeispiel der Fig. 5 - auch weiter entfernte Bodenbereiche von der Sogwirkung erfasst werden. Mammutpumpen mit trompetenförmigem Einlaufbereich eignen sich insb. für den Einsatz für Fluidbehälter mit großen Grundflächen sowie für Fluidbehälter mit unregelmäßigen Querschnitten, z.B. sternförmigen Querschnitten, welche durch z.B. mechanischen Durchmischungsvorrichtungen, wie z.B. Rührern, kaum effizient zu bewirtschaften sind. Ein konkretes Ausführungsbeispiel einer Durchmischungsvorrichtung mit einem trompetenförmigen Einlaufbereich wird weiter unten im Zusammenhang mit den Fig. 2 und 3A/B beschrieben.

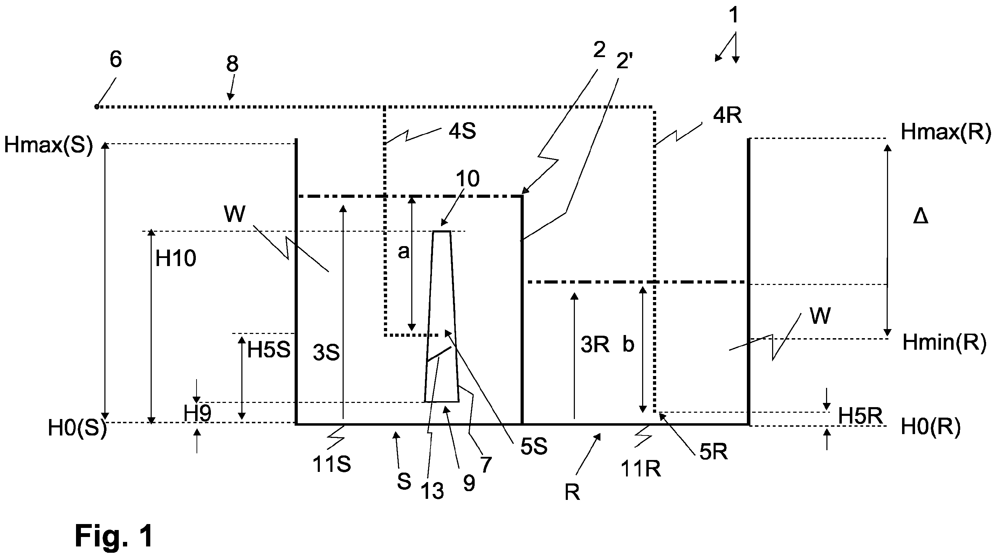

Fig. 1 zeigt eine Schemaskizze eines Ausführungsbeispiels einer als Teil einer Kläranlage ausgebildeten Abwasserbehandlungsvorrichtung, die aus einem ersten und einem zweiten fluidisch in Serie geschalteten ersten bzw. zweiten Fluidbehälter, dem Selektor S und dem Reaktor R, besteht. Die Abwasserbehandlungsvorrichtung wird dabei in einem sog. Batch-Betrieb (Chargenbetrieb) mit einer jeweils aufeinanderfolgenden Beschickungs- und Belüftungsphase, einer Sedimentations- und einer Abzugsphase gefahren.

Während der Beschickungs- und Belüftungsphase wird über einen in dem Selektor S angeordneten Zulauf zu behandelndes Abwasser W in den Selektor S eingeleitet, von wo es ab Erreichen eines vorgegebenen Pegelstandes, nämlich der mit 2 gekennzeichneten Überlaufkante, in den Reaktor R fließt. Selektor und Reaktor R weisen beide z.B. eine Tiefe Hmax(S) bzw Hmax(R) von 6m ab einer oberen Fluidbehälterkante bzw. eine Tiefe von 5m gerechnet ab der Überlaufkante 2 auf. Die Überlaufkante 2 wird durch die Oberkante einer zwischen dem Selektor S und dem Reaktor R befindlichen Trennwand 2' gebildet. Die Überlaufkante 2 erstreckt sich horizontal geradlinig, d.h. sie weist eine gleichbleibende Höhe auf.

Der Pegelstand im Selektor S und Reaktor R ist in der Fig. 1 mit 3S bzw. 3R gekennzeichnet. Bei dem in der Fig. 1 gezeigten Zustand handelt es sich um die Beschickungs- und Belüftungsphase, bei der der Selektor S mit zu behandelndem Wasser beschickt wird, so dass der Pegelstand 3S in dem Selektor S im Wesentlichen unverändert auf Höhe der Überlaufkante 2 bleibt, während der Pegelstand 3R des Reaktors R beständig ansteigt. Während dieser Phase wird Druckluft über zwei in dem Selektor S bzw. Reaktor R angeordnete Gasauslässe 5S bzw. 5R in die Fluidbehälter S, R eingeleitet. Der Gasauslass 5S des Selektors S ist dabei auf einer Höhe H5S gegenüber dem Boden 11S des Selektors S angeordnet und befindet sich auf einer hydrostatischen Höhe a. Die hydrostatische Höhe a ist dabei definiert durch die über dem Gasauslass 5S aktuell befindliche Wassersäule. In analoger Weise befindet sich der Gasauslass 5R des Reaktors R auf einer Höhe 5R über dem Boden 11R des Reaktors R. Er weist eine hydrostatische Höhe b auf, die sich aus der Wassersäule über dem Gasauslass 5R ergibt.

Die Wassersäule über dem Gasauslass 5S des Selektors S bleibt über die gesamte Beschickungs- und Belüftungsphase weitestgehend unverändert und steigt erst dann an, wenn der Füllstand 3R im Reaktor R ebenfalls die Höhe der Überlaufkante 2, d.h. 5m, erreicht. Ab dann steigen der Pegelstand 3S des Selektors S und des Reaktors R gemeinsam. Die Schwankungsbreite zwischen dem Pegelstand auf Höhe der Überlaufkante 2, also 5m, und dem maximalen Füllstand, also 6m, ist jedoch im Vergleich zur Fluidbehältertiefe mit 1m relativ gering.

Die Wassersäule über dem Gasauslass 5R des Reaktors R steigt mit zunehmendem Pegelstand 3R in dem Reaktor R. Da nur dem Reaktor R, nicht jedoch dem Selektor S, in der nachfolgend noch näher erläuterten Abzugsphase Wasser bis zu einem minimalem Pegelstand Hmin(R) entnommen wird, steigt und sinkt der Pegelstand 3R im Reaktor R zyklisch über jeden Zyklus aus Beschickungs- und Belüftungsphase, Sedimentations- und Abzugsphase.

Durch den schwankenden Pegelstand 3R in dem Reaktor R ergibt sich eine schwankende hydrostatische Höhe b des Gasauslasses 5R im Reaktor R bzw. sich schwankende, hydrostatische Drücke auf Höhe des Gasauslasses 5R des Reaktors R. Da die hydrostatische Höhe a am Gasauslass 5S des Selektors hingegen im Wesentlichen konstant bleibt, ergibt sich ein schwankendes Druckverhältnis der Drücke am Gasauslass 5S des Selektors S und dem Gasauslass 5R des Reaktors R.

Sowohl dem Selektor S als auch dem Reaktor R sollen gewisse Mindestmengen an Luft, zugeführt werden. Die Luft im Selektor S sollte dabei möglichst wenig Sauerstoff eintragen und hauptsächlich durchmischen, die Luft im Reaktor R sollte hauptsächlich der Sauerstoffübertragung dienen. Der Sauerstoffbedarf ergibt sich dabei u.a. aus den in dem zu behandelndem Wasser (Abwasser) vorhandenen Verbindungen, die oxidativ umgesetzt werden können und z.B. mit der Kennzahl des biochemischen Sauerstoffbedarfs sowie des chemischen Sauerstoffbedarfs (BSB bzw. CSB) beschrieben werden. Aber auch andere Faktoren, wie z.B. die Menge an Ammonium im Wasser, können einen Einfluss auf den Sauerstoffbedarf haben.

Im vorliegenden Fall dient der Selektor S primär als Adsorptionsbecken, in dem das darin befindliche Wasser mit über den Gasauslass 5S eingeblasene Luft mit dem sog. Belebtschlamm vermischt wird, und die organischen Verbindungen zum Teil anoxisch umsetzen werden oder auch lediglich an der Biomasse adsorbiert oder in diese absorbiert wird. Eine gründliche Durchmischung des insb. am Boden des Selektors S sich absetzenden Belebtschlamms ist daher besonders wichtig. Der Sauerstoffbedarf in dem Selektor S ist entsprechend hoch, wird aber absichtlich nicht durch die eingetragene Luftmenge abgedeckt.

Demgegenüber dient der Reaktor R als belüftetes Belebungsbecken, da den Reaktor R das bereits im Selektor S vorbehandeltes Wasser über die Überlaufkante 2 erreicht. Der Reaktor R dient daher primär der Aktivierung von sich anschließenden Nachfolgeprozessen, u.a. der Denitrifikation, d.h. der Umsetzung von Nitrat zu gasförmigen Stickstoff sowie vielen weiteren Prozessen, die im Rahmen eines gezielten Biomassewachstums zum weitestgehenden Abbau organischer Verbindungen beiträgt. Diese Prozesse finden hauptsächlich bei gegenüber dem Selektor S deutlich geringeren Gleichgewichtskonzentrationen statt. Daher beträgt das Volumen des Reaktors R auch zumeist ein Vielfaches des Volumens des Selektor S.

Aufgrund dieser unterschiedlichen Anforderungen ist der Gasauslass 5S des Selektors - bei jedem Pegelstand - hydrostatisch höher positioniert (hydrostatische Höhe a) als der Gasauslass 5R des Reaktors R (hydrostatische Höhe b). Durch eine deutlich größer dimensionierte Gaszuleitung 4R in den Reaktor R als die Zuleitung 4S in den Selektor S ergibt sich, dass die Eintragungsrate an Druckluft bzw. Sauerstoff in den Reaktor R entsprechend höher ist als in den Selektor S, obwohl beide Gasauslässe 5R, 5S mittels ihrer Gaszuführungen 4S bzw. 4R über eine gemeinsame Zuführleitung 8 mit derselben Gasquelle 6 verbunden sind und sich keine Druckminderer oder -regler zur Kontrolle der Gaseinbringungsmenge in einer der Gaszuführungen 4R, 4S befindet, d.h. beiden Gaszuführungen 4S, 4R mit Druckluft unter demselben Versorgungsdruck versorgt werden. Durch die unterschiedliche Art der Gaseinbringung - in den Selektor S durch eine nachfolgend näher beschriebene Durchmischungsvorrichtung 7 mit einer sehr grobblasigen Belüftung auf der einen Seite, sowie übermeist sehr kleine Gasauslässe 5R in dem Reaktor R mit einer eher feinblasigen Belüftung auf der anderen Seite - ergibt sich immer ein deutlich höherer Sauerstoffübergang in den Reaktor R als in den Selektor S. Dies zumal auch dadurch, dass der Sauerstoffübergang in den Reaktor R durch den Partialdruck bestimmt wird, der wiederum vom hydrostatischen Druck b im Reaktor R abhängt, der gegenüber dem hydrostatischen Druck a im Selektor S immer größer ist.

Konkret befindet sich der Gasauslass 5R des Reaktors bodennah etwa 30cm über dem Boden des Reaktors R (Bezugszeichen H5R) während der Gasauslass 5S des Selektors S sich etwa 0,5-1,5m über dem Boden des Selektors S befindet (Bezugszeichen H5S). Da bei einem Abstand von 0,5-1,5m zum Boden eine Aufwirbelung und Vermischung des am Boden des Selektors S befindlichen Belebtschlamms durch die Luftzuführung allein nicht möglich wäre, ist der Gasauslass 5S in der als Mammutpumpe ausgebildeten Durchmischungsvorrichtung 7 installiert.

Die Durchmischungsvorrichtung 7 wird mit Verweis auf die Fig. 2 und 3A bis 3C näher beschrieben. Sie besteht im Wesentlichen aus einem zweiteiligen, hohlleiterartigem Grundkörper mit einer Mantelfläche M, welcher einen Strömungskanal 15 zwischen einem vertikal unteren Einlauf 9 und einem oberen Auslauf 10 definiert. Der Grundkörper erstreckt sich dabei entlang einer vertikal angeordneten Längsachse X und ist 3,5 m lang. Der Grundkörper befindet sich unter Wasser; der Auslauf ist etwa 100 cm unterhalb der Überlaufkante 2 angeordnet (Bezugszeichen H10). Die Mantelfläche M ist im Wesentlichen nicht durchbrochen, weist insb. also keine Öffnungen oder Zuführungen auf, über die Wasser in den Strömungskanal 15 ein- oder ausströmen könnte (die Einlauföffnung des Einlaufs 9 und die Auslauföffnung des Auslaufs 10 ausgenommen).

Der Grundkörper besteht aus einem unteren trichterförmigen Abschnitt 7B - auch Einlaufbereich genannt - mit einer Länge L7B von 70 cm und einem sich daran anschließenden röhrenförmigen Abschnitt 7A mit einer Länge L7A von 3m. Diese zwei Teile sind in überlappender Weise mit einer Überlappung von 20cm aufeinander gesteckt und lösbar über Schrauben miteinander verbunden (vgl. die Schrauben in Fig. 2 und Fig. 3A). Über die Schrauben sind zusätzlich auch einer Befestigungsvorrichtung 14 zugeordnete Standwinkel 14b an dem Grundkörper befestigt, über die der Grundkörper fest am Boden 11S des Selektors S mit einem Abstand H9 von 50 cm gegenüber dem Boden 11S des Selektors S verankert werden kann. Zusätzlich wird der Grundkörper über Spannseile 14a der Befestigungsvorrichtung 14, welche weiter oben am röhrenförmigen Abschnitt 7A angreifen, in dem Selektor S gesichert, so dass der Grundkörper im Wesentlichen vertikal in dem Selektor S ausgerichtet ist.

Auf Höhe des unteren Drittels der Durchmischungsvorrichtung 7 - bezogen auf die Gesamtlänge L gemessen in Längsrichtung der Längsachse X - ist der Gasauslass 5S angeordnet, der muffenartig in der Wandung des röhrenförmigen Abschnitts 7A verschraubt ist und im Wesentlichen bündig mit der Wandung abschließt. Ein Festsetzen von im Fluidstrom mitgetragenen Festkörpern, und eine in der Folge entstehende Verstopfung, ist daher praktisch kaum möglich.

Die Luftzuführung erfolgt exzentrisch. Sie ist in dem dargestellten Ausführungsbeispiel in der Höhe unveränderlich. In anderen, nicht dargestellten Ausführungsformen kann die Luftzuführung, d.h. insb. der Gasauslass, in der Höhe variabel ausgeführt sein oder zumindest eine Vielzahl von auf unterschiedlicher Höhe positionierten Gasauslässen aufweisen, von denen nur ein Gasauslass mit der Gasquelle verbunden ist, während die anderen als sog. Blindauslässe verschlossen werden bzw. sind.

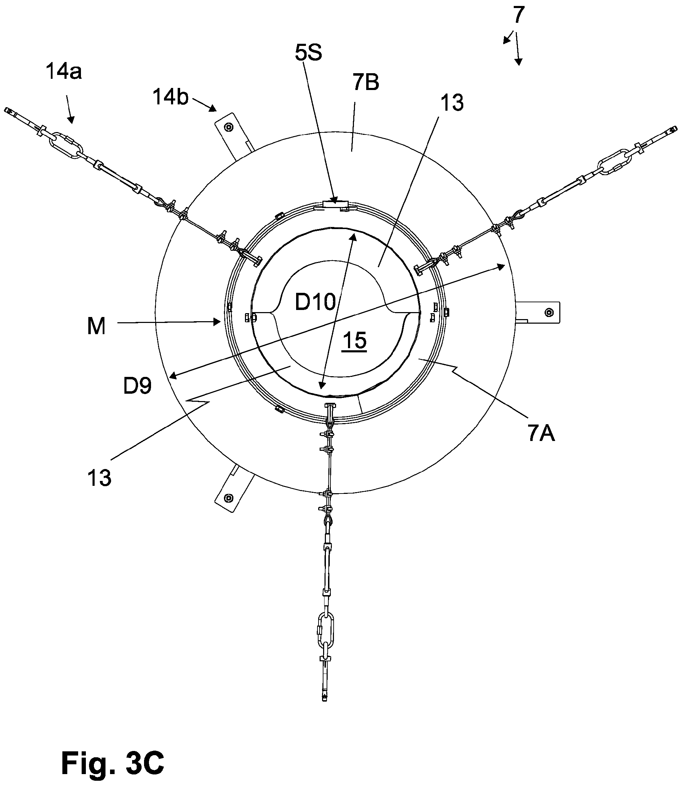

Über der Gaszuführung 5S sind in dem röhrenförmigen Abschnitt 7A ferner eine aus zwei Leitblechen bestehende Fluidleiteinrichtung 13 über Schrauben lösbar befestigt. Die Leitbleche sind sichelartig geformt, schräg gegenüber der Vertikalen und übereinander angeordnet sowie um 180° gegeneinander verdreht bzgl. der Längsachse X, so dass in dem röhrenförmigen Abschnitt 7A aufsteigendes Wasser bzgl. der Längsachse X in Drehung versetzt wird. Die Fluidleiteinrichtung 13 ist so bemessen, dass sie sich in jedem Fall noch unterhalb der Gasauslassöffnung 5S fortsetzt, in der Mitte des röhrenförmigen Abschnitts 7A jedoch einen Zylinderabschnitt des Strömungskanals 15 unberührt lässt, so dass ein Teil des Fluidstroms auf direktem Wege, d.h. vertikal, durch die Durchmischungsvorrichtung 7 strömen kann. Dies ist gut in der Draufsicht der Fig. 3C zu erkennen. Dadurch erreicht man ein spiralförmiges Ansaugen des Fluids welche sich nach unten hin gerichtet zur Ansaugöffnung 9 fortsetzt und darüber hinaus eine spiralförmige Ansaugbewegung in den dem Beckenboden des Selektor S nahegelegenen Fluidschichten induziert.

Der röhrenförmige Abschnitt 7A ist kegelförmig (kegelabschnittsförmig) ausgebildet und weist, wie insb. aus Fig. 2 ersichtlich, einen Öffnungswinkel von 2α auf. Der Öffnungswinkel 2α beträgt etwa 5°. Dies ermöglicht, dass mehrere röhrenförmige Abschnitte im nichtinstallierten Zustand auf platzsparende Weise aufeinander gestapelt werden können. Der kegelförmige Abschnitt 7A ist aus einem Blech gefertigt, das röhrenförmig gebogen und an seinen Längskanten stoffschlüssig verlötet wurde.

Der unten befindliche trichterförmige Abschnitt 7B ist trompetenartig, d.h. verrundet mit einer parabolischen Kontur, ausgeführt, was laminaren Strömungsverhältnissen ohne Strömungsabrisse im Einlaufbereich zuträglich ist. Der trichterförmige Abschnitt weist an seinem äußeren Ende des Einlaufs 9 einen Winkel β von 45° auf. Der trichterförmige Abschnitt 7B ist aus einem glasfaserverstärkten Polyesterharz-Kunststoff in einem Kunststoffspritzgußverfahren hergestellt. Andere Materialien sind möglich.

Die Einlauföffnung im Einlauf 9 ist kreisförmig ausgebildet, weist einen Durchmesser D9 von 80cm auf, und ist senkrecht zur Längsachse ausgerichtet, d.h. horizontal. Die Einlauföffnung des Einlaufs 9 befindet sich 20cm (H9) über dem Boden. Die Einlauföffnung bildet den Beginn des Strömungskanals der Durchmischungsvorrichtung 7. Der Strömungskanal verengt sich infolge des trompetenartigen Einlaufs zunächst bis auf 50cm am oberen Ende des trichterförmigen Abschnitts 7B und anschließend weiter auf etwa 40cm bis zum Auslauf am oberen Ende des röhrenförmigen Abschnitts 7A. Der Auslauf besteht analog dem Einlauf aus einer kreisförmigen Auslauföffnung mit dem Durchmesser D10 von 40cm und ist horizontal angeordnet.

Die Böden von Reaktor R und dem Selektor S sind in dem Ausführungsbeispiel der Fig. 1 plan und befinden sich auf derselben geodätischen Höhe ( H0(R) = H0(S) ). Der Erfindungsgedanke lässt sich jedoch auch auf Fluidbehälter übertragen, bei denen die Böden der Fluidbehälter auf unterschiedlichen geodätischen Höhen gelegen sind, oder uneben, z.B. trichterförmig, ausgeführt sind.

Für alle vorgemachten Ausführungen gilt, dass es sich bei den als Fluidbehältern bezeichneten Gefäßen nicht um Fluidbehälter im labortechnischen Sinne, also insbesondere nicht um transportable (Hand-)Gefäße handelt, sondern um fest installierte Becken mit einer Fassungskapazität von mehreren Kubikmetern, vorzugsweise in einem Bereich von 15m³ aufwärts, jedoch kleiner als 30.000m³. Die Becken sind im Regelfall dabei im Freien angeordnet und nicht überdacht.

### Bezugszeichenliste

- D9: Öffnungsquerschnitt Einlauföffnung
- D10: Öffnungsquerschnitt Auslauföffnung

- H0: Höhe Boden
- H5R: vertikaler Abstand Gaseinlass
- H5S: vertikaler Abstand Gaseinlass
- Hmax: Maximaler Füllstand
- Hmin: minimaler Füllstand
- H9: Höhe des Einlaufs
- H10: Höhe des Auslaufs

- a: Fluidsäule (,hydrostatische Höhe')
- b: Fluidsäule (,hydrostatische Höhe')
- c: Fluidsäule (,hydrostatische Höhe')

- K: Kaptor
- L: Längserstreckung
- M: Mantelfläche
- R: Reaktor
- S: Selektor
- W: Wasser
- X: Längsachse

- 1: Wasserbehandlungsvorrichtung
- 2: Überlaufkante
- 2': Trennwand
- 3R: Füllstand
- 3S: Füllstand
- 4S: Gaszuführung
- 4R: Gaszuführung
- 5S: Gasauslass
- 5R: Gasauslass
- 5K: Gasauslass
- 6: Gasquelle
- 7: Durchmischungsvorrichtung
- 7A: röhrenförmiger Abschnitt
- 7B: trichterförmiger Abschnitt
- 8: Zuführleitung (Gas)
- 9: Einlauf
- 10: Auslauf
- 11R: Boden
- 11S: Boden
- 12: Sedimente
- 13: Fluidleiteinrichtung
- 14: Befestigungsvorrichtung
- 14a: Standwinkel
- 14b: Spannseil
- 15: Strömungskanal

## Patentansprüche

1. Nach dem Prinzip einer Mammutpumpe arbeitende Durchmischungsvorrichtung (7) zum Umwälzen eines Fluids (W) in einem mit dem Fluid gefüllten Fluidbehälter (S) von einem ersten Niveau (H9) auf ein zweites Niveau (H10)
mit einem entlang einer Längsachse (X) sich erstreckenden hohlleiterartigem, einen Strömungskanal (15) ausbildenden Grundkörper mit einer Mantelfläche (M), umfassend
einen an einem unteren Ende befindlichen Einlauf (9) zum Ansaugen des Fluids und einen an einem oberen Ende befindlichen Auslauf (10) zur Abgabe des Fluids (W) sowie einen dazwischen befindlichen Gasauslass (5S) zum Einblasen eines Gases zur Erzeugung eines Sogs am Einlauf (9), wobei der Einlauf (9) in einem trichterförmigen Einlaufbereich (7B) angeordnet ist, der Auslauf (10) in einem röhrenförmigen Abschnitt (7A) angeordnet ist, und der trichterförmige Einlaufbereich (7B) und der röhrenförmige Abschnitt (7A) den Strömungskanal (15) ausbilden, wobei der Grundkörper zweiteilig ausgebildet ist, derart, dass der Einlaufbereich (7B) und der röhrenförmige Abschnitt (7A) jeweils ein eigenständiges Bauteil ausbilden, die zur Bildung des Grundkörpers miteinander verbunden sind, **dadurch gekennzeichnet, dass** der röhrenförmige Abschnitt (7A) als Kegelabschnitt mit einer schräg zulaufenden Mantelfläche mit einer Neigung (α) gegenüber der Vertikalen zwischen 1:0,005 und 1:0,05, ausgebildet ist.

2. Durchmischungsvorrichtung (7) nach Anspruch 1, **dadurch gekennzeichnet, dass** der röhrenförmige Abschnitt (7A) und der Einlaufbereich (7B) zur besseren Transportierbarkeit lösbar miteinander verbunden sind.

3. Durchmischungsvorrichtung (7) nach einem der vorhergehenden Ansprüche, **dadurch gekennzeichnet, dass** der Einlaufbereich (7B) verrundet, insb. mit hyperbolischer oder parabolischer Kontur, ausgeführt ist, wobei die Mantelfläche des Einlaufs (9) eine Neigung (β) von maximal 45° gegenüber der Vertikalen aufweist.

4. Durchmischungsvorrichtung (7) nach einem der vorhergehenden Ansprüche, **dadurch gekennzeichnet, dass** der Einlauf (9) einen Öffnungsquerschnitt (D9) aufweist, welcher mindestens dem zweifachen des Öffnungsquerschnitts (D10) des Auslaufs (10) entspricht.

5. Durchmischungsvorrichtung (7) nach einem der vorhergehenden Ansprüche, **dadurch gekennzeichnet, dass** der röhrenförmige Abschnitt (7A) als eine geschlossene Mantelfläche ohne Unterbrechungen oder Durchbrechungen ausgebildet ist.

6. Durchmischungsvorrichtung (7) nach einem der vorhergehenden Ansprüche, **dadurch gekennzeichnet, dass** die Durchmischungsvorrichtung (7) eine in dem röhrenförmigen Abschnitt (7A) lösbar angeordnete Fluidleiteinrichtung (13) zur Erzeugung eines sich drehenden Strömungsfeldes, insb. in Form eines helixartigen Einsatzes, umfasst.

7. Durchmischungsvorrichtung (7) nach Anspruch 6, **dadurch gekennzeichnet, dass** die Fluidleiteinrichtung (13) einen Abschnitt aufweist, der sich unterhalb des Gasauslasses (5B) erstreckt.

8. Durchmischungsvorrichtung (7) nach Anspruch 6 oder 7, **dadurch gekennzeichnet, dass** die Fluidleiteinrichtung (13) sich entlang der Mantelfläche (M) des Grundkörpers erstreckt, den Strömungskanal (15) im Querschnitt gesehen jedoch nicht vollständig verdeckt, so dass ein zentrischer Teil des Strömungskanals (15) offenbleibt, durch den Fluid auf direktem Wege von dem Einlauf (9) zu dem Auslauf (10) strömen kann.

9. Durchmischungsvorrichtung (7) nach einem der vorhergehenden Ansprüche, **dadurch gekennzeichnet, dass** der Gasauslass (5 S) unmittelbar in der Mantelfläche (M) des röhrenförmigen Abschnitts (7A) mündet und im Wesentlichen bündig mit der Mantelfläche (M) abschließt, um die Eigenschaft als Strömungshindernis zu minimieren.

10. Durchmischungsvorrichtung (7) nach einem der vorhergehenden Ansprüche, **dadurch gekennzeichnet, dass** der Gasauslass (5S) in der unteren Hälfte, bevorzugt dem unteren Drittel, bezogen auf die Gesamtlänge (L) der Durchmischungsvorrichtung (7), angeordnet ist, und einen Abstand zum Einlauf (9) von 20-150cm aufweist.

11. Durchmischungsvorrichtung (7) nach einem der vorhergehenden Ansprüche, **dadurch gekennzeichnet, dass** die Gesamtlänge (L) der Durchmischungsvorrichtung (7) wenigstens dem 4fachen des Öffnungsquerschnitts (D10) des Auslaufs (10) entspricht.

12. Durchmischungsvorrichtung (7) nach einem der vorhergehenden Ansprüche, **dadurch gekennzeichnet, dass** die Durchmischungsvorrichtung (7) eine Gesamtlänge (L) zwischen 1,5 und 4m aufweist.

13. Durchmischungsvorrichtung (7) nach einem der vorhergehenden Ansprüche, **dadurch gekennzeichnet, dass** der trichterförmige Einlaufbereich (7B), und optional auch der röhrenförmige Abschnitt (7A), aus einem Kunststoff gefertigt sind.

14. Verwendung einer Durchmischungsvorrichtung (7) nach einem der vorhergehenden Ansprüche in einer Wasserbehandlungsvorrichtung (1).

## Claims

1. A mixing device (7) operating on the principle of a mammoth pump for circulating a fluid (W) in a fluid container (S) filled with the fluid from a first level (H9) to a second level (H10)
comprising a hollow-guide-like main body extending along a longitudinal axis (X) and forming a flow channel (15) with a lateral surface (M), comprising
an inlet (9) located at a lower end for drawing in the fluid and an outlet (10) located at an upper end for discharging the fluid (W), as well as a gas outlet (5S) located therebetween for injecting a gas to generate suction at the inlet (9), wherein the inlet (9) is arranged in a funnel-shaped inlet region (7B) , the outlet (10) is arranged in a tubular section (7A), and the funnel-shaped inlet region (7B) and the tubular section (7A) form the flow channel (15), wherein the base body is constructed in two parts such that the inlet region (7B) and the tubular section (7A) each form an independent component, which are connected to one another to form the base body, **characterized in that** the tubular section (7A) is formed as a conical section with a tapering outer surface having an inclination (α) relative to the vertical between 1:0.005 and 1:0.05.

2. Mixing device (7) according to claim 1, **characterized in that** the tubular section (7A) and the inlet region (7B) are detachably connected to one another for improved transportability.

3. Mixing device (7) according to one of the preceding claims, **characterized in that** the inlet region (7B) is rounded, in particular with a hyperbolic or parabolic contour, wherein the lateral surface of the inlet (9) has an inclination (β) of at most 45° relative to the vertical.

4. Mixing device (7) according to one of the preceding claims, **characterized in that** the inlet (9) has an opening cross-section (D9) which corresponds to at least twice the opening cross-section (D10) of the outlet (10).

5. Mixing device (7) according to one of the preceding claims, **characterized in that** the tubular section (7A) is formed as a closed outer surface without interruptions or openings.

6. A mixing device (7) according to any one of the preceding claims, **characterized in that** the mixing device (7) comprises a fluid guide (13) detachably arranged within the tubular section (7A) for generating a rotating flow field, in particular in the form of a helical insert.

7. Mixing device (7) according to claim 6, **characterized in that** the fluid guide (13) contains a section extending below the gas outlet (5B).

8. Mixing device (7) according to claim 6 or 7, **characterized in that** the fluid guide device (13) extends along the outer surface (M) of the base body, but does not completely cover the flow channel (15) in cross-section, so that a central part of the flow channel (15) remains open, through which fluid can flow directly from the inlet (9) to the outlet (10).

9. A mixing device (7) according to one of the preceding claims, **characterized in that** the gas outlet (5S) opens directly into the outer surface (M) of the tubular section (7A) and is substantially flush with the outer surface (M) in order to minimize its effect as a flow obstruction.

10. Mixing device (7) according to one of the preceding claims, **characterized in that** the gas outlet (5S) is located in the lower half, preferably the lower third, relative to the total length (L) of the mixing device (7), and is spaced 20-150 cm from the inlet (9).

11. Mixing device (7) according to one of the preceding claims, **characterized in that** the total length (L) of the mixing device (7) corresponds to at least four times the cross-sectional opening area (D10) of the outlet (10).

12. Mixing device (7) according to one of the preceding claims, **characterized in that** the mixing device (7) has a total length (L) of between 1.5 and 4 m.

13. Mixing device (7) according to one of the preceding claims, **characterized in that** the funnel-shaped inlet region (7B), and optionally also the tubular section (7A), are made of plastic.

14. Use of a mixing device (7) according to one of the preceding claims in a water treatment device (1).

## Revendications

1. Dispositif de mélange (7) fonctionnant selon le principe d'une pompe mammouth permettant de faire circuler un fluide (W) dans un réservoir de fluide (S) rempli du fluide d'un premier niveau (H9) à un second niveau (H10)
comportant un corps de base en forme de guide d'ondes s'étendant le long d'un axe longitudinal (X), réalisant un canal d'écoulement (15) et comportant une surface d'enveloppe (M), comprenant
une entrée (9) se trouvant à une extrémité inférieure pour l'aspiration du fluide et une sortie (10) se trouvant à une extrémité supérieure pour la distribution du fluide (W) ainsi qu'une évacuation de gaz (5S) se trouvant entre les deux pour l'injection d'un gaz afin de produire une aspiration au niveau de l'entrée (9), dans lequel l'entrée (9) est disposée dans une zone d'entrée en forme d'entonnoir (7B), la sortie (10) est disposée dans une section tubulaire (7A), et la zone d'entrée en forme d'entonnoir (7B) et la section tubulaire (7A) réalisent le canal d'écoulement (15), dans lequel le corps de base est réalisé en deux parties de telle sorte que la zone d'entrée (7B) et la section tubulaire (7A) réalisent respectivement un composant autonome, lesquels sont reliés entre eux pour former le corps de base, **caractérisé en ce que** la section tubulaire (7A) est réalisée sous forme de section conique comportant une surface d'enveloppe effilée de manière oblique avec une inclinaison (α) par rapport à la verticale comprise entre 1:0,005 et 1:0,05.

2. Dispositif de mélange (7) selon la revendication 1, **caractérisé en ce que** la section tubulaire (7A) et la zone d'entrée (7B) sont reliées entre elles de manière amovible pour une meilleure transportabilité.

3. Dispositif de mélange (7) selon l'une des revendications précédentes, **caractérisé en ce que** la zone d'entrée (7B) est conçue de manière arrondie, en particulier avec un contour hyperbolique ou parabolique, dans lequel la surface d'enveloppe de l'entrée (9) présente une inclinaison (β) de 45° maximum par rapport à la verticale.

4. Dispositif de mélange (7) selon l'une des revendications précédentes, **caractérisé en ce que** l'entrée (9) présente une section transversale d'ouverture (D9) correspondant à au moins deux fois la section transversale d'ouverture (D10) de la sortie (10).

5. Dispositif de mélange (7) selon l'une des revendications précédentes, **caractérisé en ce que** la section tubulaire (7A) est réalisée sous forme de surface d'enveloppe fermée sans interruptions ou percées.

6. Dispositif de mélange (7) selon l'une des revendications précédentes, **caractérisé en ce que** le dispositif de mélange (7) comprend un appareil de guidage de fluide (13) disposé de manière amovible dans la section tubulaire (7A) pour la génération d'un champ d'écoulement rotatif, en particulier sous forme d'insert hélicoïdal.

7. Dispositif de mélange (7) selon la revendication 6, **caractérisé en ce que** l'appareil de guidage de fluide (13) présente une section s'étendant en dessous de l'évacuation de gaz (5B).

8. Dispositif de mélange (7) selon la revendication 6 ou 7,
**caractérisé en ce que** l'appareil de guidage de fluide (13) s'étend le long de la surface d'enveloppe (M) du corps de base mais ne recouvre pas complètement le canal d'écoulement (15) vu en coupe transversale, de sorte qu'une partie centrale du canal d'écoulement (15) reste ouverte, à travers laquelle le fluide peut s'écouler directement de l'entrée (9) vers la sortie (10).

9. Dispositif de mélange (7) selon l'une des revendications précédentes, **caractérisé en ce que** l'évacuation de gaz (5S) débouche directement dans la surface d'enveloppe (M) de la section tubulaire (7A) et se termine sensiblement à fleur de la surface d'enveloppe (M) afin de minimiser sa propriété d'obstacle à l'écoulement.

10. Dispositif de mélange (7) selon l'une des revendications précédentes, **caractérisé en ce que** l'évacuation de gaz (5S) est disposée dans la moitié inférieure, de préférence dans le tiers inférieur, par rapport à la longueur totale (L) du dispositif de mélange (7), et présente une distance de 20 à 150 cm par rapport à l'entrée (9).

11. Dispositif de mélange (7) selon l'une des revendications précédentes, **caractérisé en ce que** la longueur totale (L) du dispositif de mélange (7) correspond à au moins quatre fois la section transversale d'ouverture (D10) de la sortie (10).

12. Dispositif de mélange (7) selon l'une des revendications précédentes, **caractérisé en ce que** le dispositif de mélange (7) présente une longueur totale (L) comprise entre 1,5 et 4 m.

13. Dispositif de mélange (7) selon l'une des revendications précédentes, **caractérisé en ce que** la zone d'entrée en forme d'entonnoir (7B), et éventuellement aussi la section tubulaire (7A), sont fabriquées en une matière plastique.

14. Utilisation d'un dispositif de mélange (7) selon l'une des revendications précédentes dans un dispositif de traitement d'eau (1).
